# FASCICULE DE BREVET EUROPEEN

(11) **EP 3 549 241 B1**
(45) Date de publication et mention de la délivrance du brevet: **29.11.2023**
(21) Numéro de dépôt: 17792042.8
(22) Date de dépôt: 30.10.2017
(51) Int. Cl.: H02K 7/08, F16C 41/00, H02K 11/215, H02K 9/08, H02K 9/14

(54) **MACHINE ELECTRIQUE TOURNANTE INTEGRANT UN CAPTEUR DE POSITION MAGNETIQUE**
ELEKTRISCHE ROTIERENDE MASCHINE MIT MAGNETISCHEM POSITIONSSENSOR
ROTATING ELECTRICAL MACHINE INCLUDING A MAGNETIC POSITION SENSOR

(30) Priorité: 01.12.2016 FR 1661795
(43) Date de publication de la demande: 09.10.2019
(73) Titulaire: Mavel EDT S.p.A., 11026 Pont-Saint-Martin (AO) (IT)
(72) Inventeur: DIB, Wissam, 92150 Suresnes (FR); FAVRE, Luca, 11010 Valpelline (AO) (IT); BETTONI, Davide, Settimo Vittone TO (IT)
(74) Mandataire: Leoncini, Alberto
(86) Numéro de dépôt international: PCT/EP2017/077740
(87) Numéro de publication internationale: WO 2018/099667

(56) Documents cités:
- EP-A1- 0 780 955
- DE-A1-102008 040 318
- DE-A1-102009 023 691
- DE-A1-102011 053 611
- DE-A1-102015 002 562
- FR-A- 1 001 845
- FR-A1- 2 917 476
- GB-A- 782 200
- US-A1- 2010 012 409
- US-A1- 2014 021 832

## Description

### Domaine de l'invention

La présente invention concerne le domaine des machines électriques tournantes, en particulier la mesure de la position angulaire d'un rotor d'une machine électrique tournante.

Elle concerne plus particulièrement une machine électrique tournante à réluctance synchrone intégrant un capteur de position magnétique.

### Contexte général

Une machine électrique tournante comporte classiquement une partie fixe, le stator, et une partie mobile en rotation, le rotor, disposées coaxialement l'une dans l'autre. Le rotor est généralement logé à l'intérieur du stator qui porte des bobinages électriques générant un champ magnétique permettant d'entrainer en rotation le rotor. Le rotor est typiquement formé d'un corps formé d'un empilage de tôles, et placé sur un arbre de rotation. Ces tôles comprennent des logements pour des aimants permanents ou des bobines formant des pôles magnétiques à la périphérie du rotor. Les aimants peuvent apparaître à la surface du rotor ou être complètement intégrés au sein du rotor.

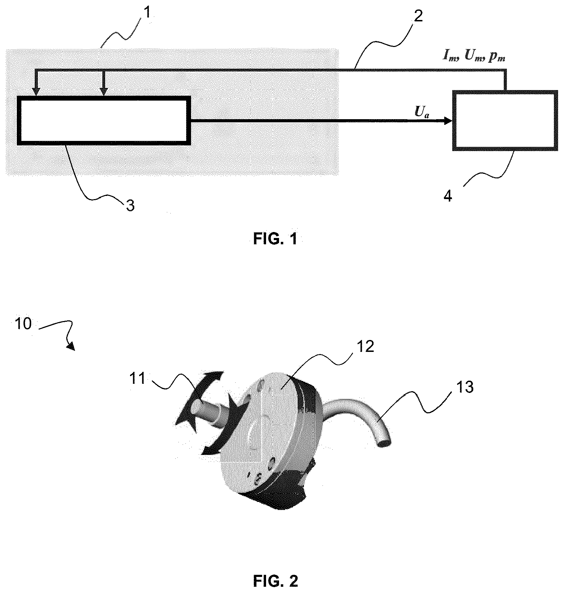

Une information précise de la position du rotor est indispensable pour le contrôle de ces machines, surtout à haute vitesse. La figure 1 illustre le principe de ce fonctionnement et les relations entre la machine électrique 4, l'algorithme de contrôle du couple de la machine 3 et l'information 2 obtenue par les capteurs de tension *Uₘ*, de courant *Iₘ* et de position du rotor *pₘ* de la machine. L'information précise de la position du rotor *pₘ* de la machine 4 est classiquement utilisée par un algorithme 3 de contrôle vectoriel du couple de la machine. On parle généralement de contrôle vectoriel, car pour que la machine 4 produise le couple requis par l'application visée, il faut maintenir les courants électriques y circulant en phase et synchronisés avec la position du rotor. Afin d'y parvenir, le microcontrôleur 1 de la machine, intégré dans l'onduleur de pilotage de la machine, contrôle la machine en appliquant des tensions *Uₐ* aux bornes de la machine 4, ces tensions étant fournies par l'algorithme de contrôle en couple 3.

Il est connu différentes manières d'obtenir la position angulaire du rotor d'une machine électrique tournante. Une première manière consiste à estimer cette position de façon purement logicielle, et une deuxième manière consiste à déterminer cette position à partir de capteurs de position. L'usage de capteurs de position fournit une information plus précise. Certaines machines électriques tournantes, telles que les machines à réluctance synchrone, comportant peu d'aimants, nécessitent d'avoir une information sur la position du rotor qui soit très précise. Typiquement, la mesure doit être précise à moins de 1 degré électrique près, surtout à haute vitesse, sachant que 1 degré électrique est égal à 1 degré mécanique multiplié par le nombre de paires de pôles. Plus généralement, une précision la plus élevée possible est généralement recherchée afin de permettre un contrôle robuste et fiable de la machine.

Plusieurs type de capteurs de position connus peuvent être utilisés, parmi lesquels les capteurs de type « résolveurs » qui fournissent généralement une mesure précise mais sont couteux et peuvent nécessiter une adaptation dans le contrôle de l'onduleur. D'autres types de capteurs tels que les capteurs magnétiques, moins coûteux, ou les capteurs incrémentaux peuvent être utilisés.

La présente invention porte sur une machine électrique tournante munie d'un capteur de position magnétique pour déterminer la position angulaire du rotor.

La figure 2 illustre un capteur de position magnétique classique, dont le principe de fonctionnement est identique à celui utilisé dans la machine selon l'invention. Le capteur de position 10 est composé de deux parties : une partie tournante 11 comportant un aimant, le mouvement de rotation de cette partie 11 étant illustré par des flèches, et une partie fixe 12 comportant plusieurs capteurs magnétiques à effet Hall. La partie tournante est solidaire de l'arbre du rotor de la machine, l'aimant étant en général intégré dans l'arbre. Les capteurs magnétiques à effet Hall de la partie fixe 12 détectent l'amplitude du champ magnétique tournant créé par l'aimant en rotation avec l'arbre, ce qui permet de générer des signaux de sortie donnant la position de l'aimant, et donc la position angulaire du rotor. Le câble 13 permet d'envoyer les signaux électriques générés par le capteur de position 10. Un tel capteur est alimenté par un courant de tension continu, par exemple une tension continue Vdd de 5 volt ± 5%. Le capteur fourni deux signaux en sortie : le sinus et le cosinus de la position angulaire du rotor. Ces signaux V_{A} et V_{B} ont typiquement une forme sinusoïdale, et sont décalés de 90°. Ainsi, pour piloter la machine électrique, ces deux signaux sont utilisés et conditionnés dans le microcontrôleur utilisé pour le pilotage de la machine.

L'éloignement radial entre l'aimant, fixé sur l'arbre, et les capteurs magnétiques de la partie fixe a un impact très fort sur l'amplitude des signaux en sortie, ainsi que sur la précision de la mesure.

Cette topologie de capteur de position présente plusieurs avantages :
- un faible coût par rapport à la précision de la mesure de position que peut fournir ce capteur ;
- un indice de protection « IP » élevé, conformément à la norme EN 60529, typiquement un indice de protection IP67 ;
- une installation facile.

En revanche, de tels capteurs de position sont très sensibles aux déplacements radial et axial de l'aimant de la partie tournante par rapport à la partie fixe comportant les capteurs magnétiques. Par déplacement axial on entend un déplacement selon la direction formée par l'axe (X) autour duquel tourne l'arbre du rotor, et par déplacement radial on entend un déplacement perpendiculairement à l'axe (X). Ces déplacements peuvent résulter par exemple de la chaine de tolérance mécanique, de la thermique (par exemple la dilatation du fer), de la tolérance mécanique du support de l'aimant (décalage du trou dans l'arbre). La chaine de tolérance mécanique est liée à la présence de pièces intermédiaires entre le capteur de position et la référence mécanique traditionnellement adoptée qui est le palier supportant l'arbre de rotation, notamment la présence de pièces intermédiaires tournantes telles qu'un ventilateur monté sur l'arbre pour assurer un refroidissement de la machine. Toute pièce intermédiaire entre le capteur de position et le palier supportant l'arbre de rotation (à l'arrière de la machine) rend difficile le maintien d'une chaine de tolérance stricte pour les différentes pièces mécaniques, en particulier pour le capteur de position. Or, une tolérance stricte est importante pour garantir une mesure précise du rotor par le capteur de position magnétique.

En outre, le signal en sortie, en particulier l'amplitude (crête à crête) du signal, peut être perturbé par le champ magnétique induit de la machine et la magnétisation de l'arbre sur lequel l'aimant est monté. Normalement, le support de l'aimant est amagnétique, ce qui permet d'une part de protéger l'aimant des lignes de champ magnétique arrivant du stator, et d'autre part de garder concentré le champ de l'aimant. Cependant, il y a généralement toujours des lignes de champs de fuite, surtout à fort courant, qu'on ne peut pas filtrer par le support. Si l'arbre se magnétise, l'aimant du capteur de position risque de se démagnétiser avec le temps, et des lignes de champ magnétique peuvent également être créées dans le stator, tout cela perturbant alors le fonctionnement du capteur de position magnétique et donc la mesure.

EP-A1-0 780 955, DE-A1-10 2008 040318 et US-A1-2014/021832 décrivent des machines électriques tournantes selon le préambule de la revendication 1.

### Objectifs et résumé de l'invention

La présente invention a pour objectif de surmonter les inconvénients de l'art antérieur mentionné ci-dessus, et de fournir une machine électrique tournante intégrant un capteur de position angulaire du rotor qui puisse assurer une information robuste et précise de la position du rotor indépendamment des perturbations mécaniques et/ou magnétiques susceptibles de se produire sur l'arbre du moteur.

En particulier, la présente invention vise à fournir une telle information de la position du rotor, tout en assurant une intégration aisée du capteur de position, et/ou une protection relative à l'étanchéité élevée dudit capteur, typiquement un indice de protection IP67 conformément à la norme EN 60529, afin d'être compatible avec les exigences relatives à l'étanchéité de la machine électrique, et/ou un coût économique limité pour la mesure de la position du rotor.

Ainsi, pour atteindre au moins l'un des objectifs susvisés, parmi d'autres, la présente invention propose une machine électrique tournante selon la revendication 1.

Selon un mode de réalisation de l'invention, le troisième palier est en contact avec la partie tournante du capteur de position.

Selon un mode de réalisation, la partie tournante du capteur de position comporte un insert logé dans une cavité formée à l'extrémité du côté opposé au côté d'entraînement de la charge de l'arbre de rotation, la cavité comportant une ouverture vers l'extérieur de la machine, l'insert étant muni du côté de l'ouverture de la cavité de l'aimant de capteur de position.

De préférence, l'insert de la partie tournante du capteur de position est formé d'un matériau amagnétique, de préférence un acier amagnétique ou du laiton.

De préférence, le troisième palier est formé d'un matériau ferromagnétique, de préférence un acier ferromagnétique.

Le troisième palier peut être de type à roulements, de préférence à billes, et comporte de préférence une bague externe fixée aux parois de l'ouverture du support métallique et une bague interne fixée à l'extrémité du côté opposé au côté d'entraînement de l'arbre de rotation et en contact avec la partie tournante du capteur.

Selon l'invention, le support métallique fixe de la partie fixe du capteur comporte une face interne tournée vers le flasque arrière et une face externe orientée vers l'extérieur de la machine, la face externe comportant une surface plane en périphérie de l'ouverture du support métallique, ladite surface plane étant en contact avec la partie fixe du capteur de position.

Avantageusement, le capteur de position magnétique intégré à la machine a un indice de protection IP67 selon la norme européenne EN60529 dans sa version en vigueur à la date de dépôt du présent brevet.

La machine électrique selon l'invention a de préférence une puissance comprise entre 20 kW et 75 kW.

La machine électrique selon l'invention est de préférence à réluctance synchrone.

D'autres objets et avantages de l'invention apparaîtront à la lecture de la description qui suit d'exemples de réalisations particuliers de l'invention, donnés à titre d'exemples non limitatifs, la description étant faite en référence aux figures annexées décrites ci-après.

### Brève description des figures

La figure 1, déjà décrite ci-dessus, est un schéma de principe de l'utilisation de l'information de la position du rotor pour le contrôle moteur d'une machine électrique.
La figure 2, déjà décrite ci-dessus, est une vue en perspective d'un exemple de capteur de position magnétique classique de même type que le capteur de position pouvant être utilisé dans une machine électrique selon l'invention.
La figure 3 est une vue en perspective avec arrachement de la partie arrière de la machine électrique selon un mode de réalisation de l'invention.
La figure 4 est une vue en perspective avec arrachement de la partie avant de la machine électrique selon ce même mode de réalisation de l'invention.
La figure 5 est une vue en coupe longitudinale de la machine électrique selon ce même mode de réalisation de l'invention.
La figure 6 est un détail de la vue de la figure 4 centré sur l'intégration du capteur de position du rotor dans la machine électrique selon l'invention.
La figure 7 est un détail de la vue de la figure 3 centré sur l'intégration du capteur de position du rotor dans la machine électrique selon l'invention.

Sur les figures, les mêmes références désignent des éléments identiques ou analogues.

### Description de l'invention

L'objet de l'invention porte sur une machine électrique tournante intégrant un capteur magnétique de la position angulaire du rotor.

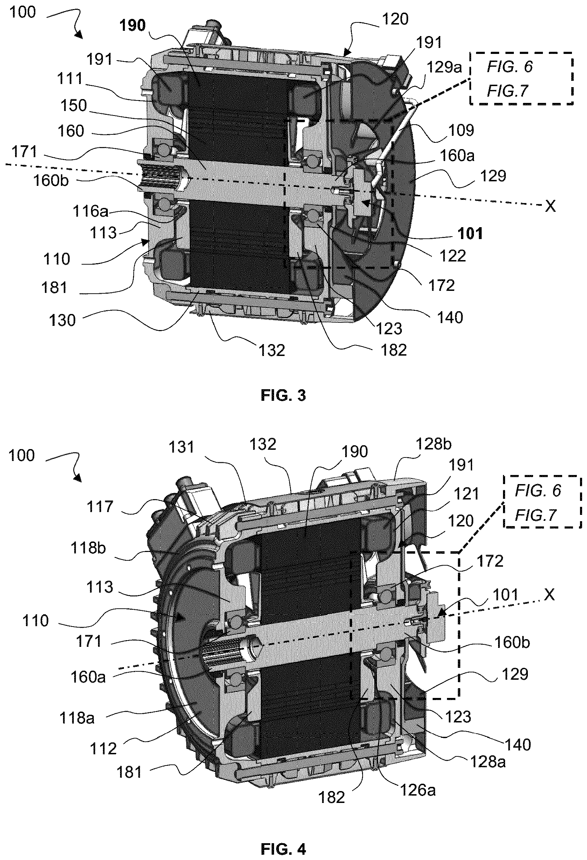

Les figure 3 à 7 représentent, selon différentes vues et en coupe, une machine électrique tournante selon un mode de réalisation de l'invention, qui peut être utilisée comme moteur électrique de traction dans un véhicule électrique ou hybride.

Par exemple, un moteur tel que représenté aux figures 3 à 7 est un moteur à réluctance synchrone, aussi appelé synchro-réluctant, d'une puissance continue de 35 kW, de puissance transitoire (Peak) 52 kW, et pouvant fonctionner avec une tension d'alimentation du bus DC de 350 V.

Bien que s'appliquant avantageusement aux machines électriques à réluctance synchrone, la présente invention ne se limite pas à cette topologie de machine électrique, et concerne plus largement tout type de machine électrique, en particulier les machines électriques dont la puissance est comprise entre 20 kW et 180 kW. Plus spécifiquement, les machines électriques telles qu'illustrées aux figures 3 à 7, comportant un système de refroidissement spécifique, qui inclue notamment un refroidissement externe (carcasse et flasques) par ventilation d'air peuvent avoir typiquement une puissance comprise entre 20 et 75 kW. Au-delà de 75 kW, les machines électriques incluent de préférence d'autres moyens de refroidissement externe, par exemple un refroidissement par circulation de liquide.

Le moteur électrique 100 comporte une carcasse 130 fermée à une extrémité par un flasque avant 110 et à une autre extrémité par un flasque arrière 120. Le stator 190, avec ses bobines, et le rotor 150 du moteur électrique sont contenus dans la carcasse 130. Une boîte à bornes (non référencée dans les figures) dans laquelle s'effectuent les branchements est fixée sur la carcasse 130, en particulier au niveau du flasque 110 qui ferme la carcasse à l'avant du moteur. La carcasse 130 et les flasques 110 et 120 sont en métal, par exemple en aluminium ou en fer. Sans que cela soit illustré, la carcasse peut former avec l'un des flasques une seule et même pièce, ou encore chaque flasque peut former avec une partie de la carcasse une pièce unitaire, les deux pièces pouvant alors être réunies pour former un boîtier contenant le stator et le rotor.

Le rotor 150 comporte un corps fixé à l'arbre de rotation 160, monté rotatif dans le stator. L'arbre de rotation 160, tournant autour de l'axe (X), est porté par les flasques avant 110 et arrière 120 : le flasque avant 110 supporte le côté d'entrainement de la charge 160a de l'arbre de rotation 160, et le flasque arrière 120 supporte le côté opposé au côté d'entraînement de la charge 160b de l'arbre de rotation 160.

Dans le reste de la description, on désignera par avant de la machine le côté de la machine où se fait l'entrainement d'une charge par l'arbre de rotation du rotor, et par arrière de la machine le côté opposé.

Plus spécifiquement, les flasques avant 110 et arrière 120 comportent chacun une face interne (111, 121) orientée vers l'intérieur de la machine, une face externe (112, 122) orientée vers l'extérieur de la machine, et un logement (116a, 126a) positionné dans une partie médiane de la face interne (111, 121) pour recevoir un palier (171, 172). Les paliers 171 et 172, par exemple à roulement à billes, supportent respectivement le côté d'entraînement d'une charge 160a de l'arbre de rotation 160 et le côté opposé au côté d'entraînement de la charge 160b de l'arbre de rotation.

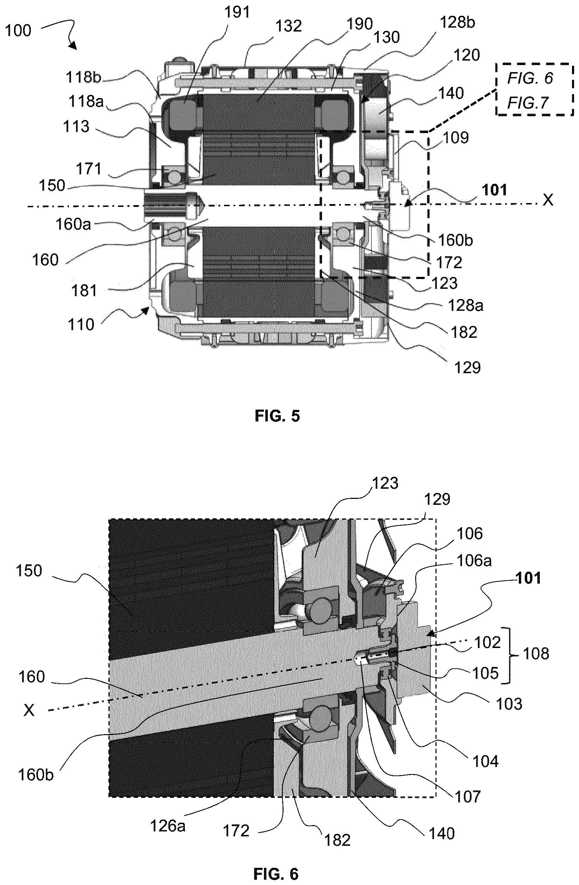

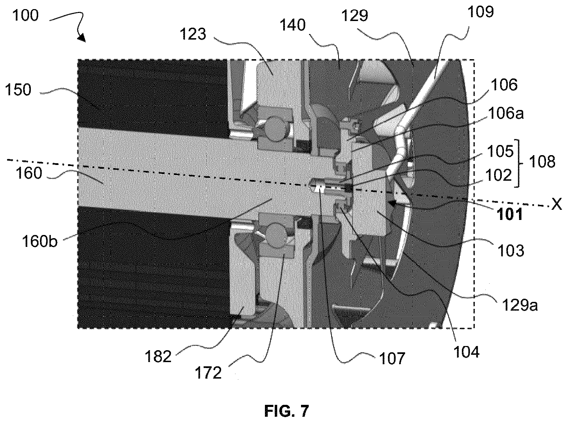

Selon l'invention, la machine électrique comporte un capteur de position magnétique 101 pour mesurer la position angulaire du rotor, lors de la rotation de l'arbre. Le capteur de position 101 et son intégration dans la machine électrique sont particulièrement bien visibles dans les figures 6 et 7, qui sont respectivement des détails de la partie arrière de la machine telle que représentée aux figures 4 et 3.

Le capteur de position comporte :
- une partie tournante 108 comprenant un aimant 102, fixée à l'extrémité 160b de l'arbre de rotation 160 de manière à être solidaire de l'arbre lors de sa rotation ;
- une partie fixe 103 comportant des capteurs à effet Hall et des moyens de transmission des signaux de sortie du capteur 109. La partie fixe 103 est en regard de la partie tournante 108 et est montée sur un support métallique fixe 106 relié à la carcasse 130 de la machine 100. Les capteurs à effet Hall peuvent être classiquement répartis régulièrement selon 360 degrés mécaniques. Par exemple, si la partie fixe 103 comporte trois capteurs à effet Hall, ceux-ci sont placés à 120 degrés d'écart.

Selon l'invention, la partie tournante 108 est désolidarisée de la partie fixe 103 du capteur de position 101 par un palier 104. Ce palier 104 est centré sur l'axe (X) de rotation de l'arbre. Il est fixé d'une part à l'extrémité 160b de l'arbre 160 et d'autre part aux parois d'une ouverture formée dans le support métallique 106, ladite ouverture étant apte à laisser passer l'extrémité de l'arbre de rotation 160 muni de la partie tournante du capteur.

Le palier 104 est de préférence en contact avec la partie tournante du capteur, ce qui ajoute à la robustesse mécanique et à la précision mécanique de ce montage spécifique.

Selon l'invention, ce palier 104 constitue une nouvelle référence mécanique pour les pièces qui peuvent être montées sur l'arbre, en remplacement de la référence habituelle choisie comme étant le palier 172, notamment pour les pièces du capteur de position. Cette nouvelle référence, du fait de sa proximité avec le capteur de position de l'arbre, permet d'assurer une faible tolérance (plus grande précision) de la position radiale et axiale du capteur de position et un éloignement entre l'aimant et le capteur constant et précis. Par conséquent, l'ensemble formé par ce palier 104 et le capteur de position autorise de ce fait une information robuste et précise de la position du rotor mesurée par le capteur 101, et ce indépendamment de toute perturbation mécanique qui pourrait intervenir, par exemple du fait de la présence d'autres pièces mécaniques montées sur l'arbre, tel qu'un ventilateur externe comme décrit plus bas.

Cette configuration du palier 104 et du capteur de position 101 a également pour effet de fermer l'induction des lignes de champ magnétique qui peut se créer par magnétisation de l'arbre, formé en un matériau ferromagnétique. De ce fait, l'aimant du capteur est ainsi isolé de toute perturbation magnétique induite par la magnétisation du rotor, qui serait néfaste pour la mesure de la position du rotor. Selon l'invention, le risque de démagnétisation du capteur de position avec le temps est donc limité.

La mesure de la position de l'arbre tournant se fait en détectant la variation de champ magnétique liée à la rotation de l'aimant 102 solidaire de l'arbre 160. Le principe de fonctionnement d'un capteur de position magnétique, de type dispositif à effet Hall, est bien connu de l'homme du métier, et non rappelé ici. Les signaux de sortie du capteur sont envoyés par les moyens de transmission des signaux de sortie du capteur 109, typiquement un système de câbles, vers le microcontrôleur intégré dans l'onduleur de pilotage du moteur.

Le capteur de position magnétique 101 a de préférence un indice de protection IP67 selon la norme européenne EN 60529 relative à l'étanchéité. Cet indice IP classe le niveau de protection qu'offre un matériel aux intrusions de corps solides et liquides. Le format de l'indice, donné par la norme CEI 60529, est « IP » suivi de deux chiffres et/ou une lettre. Le premier chiffre a trait à la protection contre la poussière, et le deuxième chiffre a trait à la protection contre l'intrusion de l'eau. Un objet d'indice IP 67 signifie que l'objet est totalement protégé contre les poussières, et contre les effets de l'immersion temporaire (jusqu'à 1 m), la pénétration d'eau en quantité nuisible étant impossible lorsque l'équipement est immergé dans l'eau dans des conditions définies de pression et de temps (jusqu'à 1 m de submersion).

De préférence, la partie tournante 108 du capteur 101 comporte un insert 105 muni de l'aimant 102. L'insert 105 est logé dans une cavité 107 formée à l'extrémité 160b de l'arbre 160. Cette cavité 107 comporte une ouverture vers l'extérieur de la machine. L'aimant 102 est positionné dans l'insert 105 du côté de cette ouverture. Une telle cavité a pu être obtenue par perçage de l'extrémité 160b de l'arbre. L'insert 105 est par exemple fixé par filetage à l'arbre 160.

L'insert 105 de la partie tournante 108 du capteur de position 101 est de préférence formé d'un matériau amagnétique, tel qu'un acier amagnétique ou du laiton. Cette composition contribue à protéger l'aimant des lignes de champ magnétique arrivant du stator, et à garder concentré le champ propre à l'aimant.

Le palier 104 est de préférence formé d'un matériau ferromagnétique, par exemple un acier ferromagnétique. Il est ainsi apte à fermer les lignes de champ de fuite.

Le palier est avantageusement de type à roulements, typiquement à billes, bien que pouvant également être à rouleaux. Le palier peut ainsi comprendre une bague externe fixée aux parois de l'ouverture centrale du support métallique 106 et une bague interne fixée à l'extrémité 160b de l'arbre 160 et en contact avec la partie tournante 108 du capteur, en particulier en contact avec une partie de l'insert 105 extérieure à la cavité 107.

Le support métallique fixe 106 de la partie fixe 103 du capteur 101 comporte une face interne tournée vers le flasque arrière 120, et une face externe orientée vers l'extérieur de la machine. La face externe du support 106 comporte une surface plane 106a en périphérie de l'ouverture du support métallique, la surface plane étant en contact avec la partie fixe 103 du capteur de position. Plus spécifiquement, la face externe du support métallique 106 comporte un logement annulaire recevant la partie fixe 103 du capteur, ledit logement annulaire comportant la surface plane 106a, cette dernière se situant en périphérie de l'ouverture laissée pour l'extrémité de l'arbre comportant l'aimant du capteur de position. Le support métallique fixe 106 peut avoir la forme d'un disque, tel que représenté dans les figures 3 à 7, ou toute autre forme.

La présente invention s'applique avantageusement à une machine électrique qui comporte un système de refroidissement comprenant des moyens de refroidissement externe pour refroidir la carcasse et les flasques avant et arrière, typiquement un ventilateur externe placé à l'arrière de la machine et monté sur l'arbre de rotation.

Selon le mode de réalisation de l'invention représenté dans les figures 3 à 7, les moyens de refroidissement externe comprennent un ventilateur externe 140 solidaire de l'arbre de rotation 160 et disposé entre la face externe 122 du flasque arrière 120 et le palier 104 du capteur de position, de manière à envoyer de l'air extérieur le long de la carcasse 130 en direction du flasque avant 110.

La présence du palier 104 dans la machine selon l'invention fournit une nouvelle référence mécanique qui est positionnée après le ventilateur 140 (vers l'extérieur de la machine selon l'axe X), c'est-à-dire entre le ventilateur 140 et le capteur de position 101. Ainsi, cette nouvelle référence mécanique proche du capteur de position permet d'assurer une faible tolérance de la position radiale et axiale du capteur de position et un éloignement entre l'aimant et le capteur constant et précis. Une telle configuration est favorable à des signaux en sortie du capteur de position précis, et non perturbés, c'est-à-dire présentant notamment peu d'harmoniques, et par conséquent facilement exploitables.

Selon le mode de réalisation de l'invention représenté dans les figures 3 à 7, la carcasse 130 a une surface externe comportant un ensemble d'ailettes de refroidissement 131 allongées sensiblement selon un axe parallèle à l'axe (X) de l'arbre de rotation 160. Le flasque arrière 120 comporte une partie centrale 128a en forme de couronne reliée à une partie périphérique cylindrique 128b, et au moins une ouverture 127 disposée entre ladite partie centrale 128a et ladite partie périphérique 128b du flasque arrière 120 pour diriger l'air extérieur envoyé par le ventilateur externe 140 dans des passages formés par l'ensemble des ailettes de refroidissement 131 de la surface externe de la carcasse 130.

Le ventilateur externe 140 comporte de préférence une roue d'entrainement de l'air extérieur montée sur l'arbre de rotation 160 entre la face externe 122 du flasque arrière 120 et le palier 104 du capteur de position.

Une plaque de protection 129 est positionnée à l'arrière du moteur, recouvrant le ventilateur externe 140. La plaque de protection 129 est fixée à la partie périphérique 128b du flasque arrière 120. La plaque de protection 129 comporte des orifices 129a pour l'entrée de l'air extérieur, qui est aspiré par la roue d'entrainement du ventilateur 140.

Le support métallique fixe 106 pour le capteur de position 101 est relié à la carcasse en étant par exemple fixé à cette plaque de protection 129.

La présente invention peut également s'appliquer à une machine électrique comprenant des moyens de refroidissement externe comportant un circuit de liquide de refroidissement pour refroidir la carcasse et les flasques avant et arrière.

De préférence, le système de refroidissement de la machine électrique selon l'invention comporte en outre deux ventilateurs internes (181, 182) montés fixes sur l'arbre 160 du rotor 150, aux deux extrémités du rotor, faisant chacun face à la face interne d'un flasque (110, 120) comportant des ailettes (113, 123) aptes à orienter le flux d'air créé par les ventilateurs internes et aptes à capter sa chaleur.

Dans ce cas, la machine électrique intégrant un tel système de refroidissement, incluant la paire de ventilateurs internes, est une machine électrique tournante fermée. Une description détaillée de ce mode de réalisation particulier incluant un système de refroidissement interne est faite ci-après.

Par machine électrique fermée on entend une machine électrique dont le rotor et le stator sont enfermés dans une carcasse étanche, qu'on peut aussi désigner sous le terme de carter.

Dans le mode de réalisation de l'invention illustré aux figures 3 à 7, la carcasse, qui contient le rotor et le stator de la machine électrique, est fermée de manière étanche par les deux flasques 110 et 120. Les flasques avant 110 et arrière 120 comportent en effet des moyens d'étanchéité pour fermer de manière étanche la carcasse 130.

Le flasque avant 110 comporte une partie centrale en forme de couronne 118a et une partie périphérique de forme cylindrique 118b. La face interne 111, tournée vers l'intérieur de la carcasse 130, comporte un logement 116a positionné dans la partie médiane de la face interne destiné à recevoir le palier 171. Ce logement 116a comporte en son centre un orifice prévu pour le passage de l'arbre de rotation 160 du rotor. Des joints d'étanchéité sont prévus au niveau de l'orifice de passage de l'arbre 160 et sur le périmètre de la partie périphérique 118b destinée à venir en contact avec la carcasse 130. La partie périphérique 118b du flasque 110 comporte également des points de fixation pour fixer le flasque avant 110 à la carcasse 130.

La face interne 111 du flasque avant 110 comporte un ensemble d'ailettes 113, agencées sur la périphérie du logement 116a du palier 171. Ces ailettes 113 ont pour fonction d'orienter le flux d'air créé par la rotation d'un ventilateur interne 181 placé entre le palier 171 et le rotor 150, comme décrit plus bas, et de capter la chaleur de ce flux d'air. La face interne 111 du flasque avant 110 comporte par exemple douze ailettes 113.

Les ailettes 113 sont de préférence réparties régulièrement autour du logement 116a. De préférence, les ailettes et le corps du flasque forme une seule entité (monobloc), par exemple issu d'une fabrication à l'aide d'un moule. Avantageusement, les ailettes ont une forme telle qu'elles contribuent à une circulation de l'air interne spécifique qui refroidit efficacement les têtes de bobines et la partie tournante de la machine. Chaque ailette est de préférence plane, et a une forme générale de trapèze dont les bases (côtés opposés parallèles) sont orthogonales à l'axe (X), et dont le côté opposé au logement 116a n'est pas droit mais courbe, présentant une concavité (par rapport à un point situé à la périphérie 118b du flasque dans le prolongement radial de l'ailette). Cette concavité du bord de l'ailette permet d'assurer une proximité optimale avec les têtes de bobines tout en assurant un écoulement d'air optimisé pour un refroidissement efficace. Cette description des ailettes est faite sur la base des parties visibles à la surface du flasque (et non sur la base d'une coupe du flasque). Selon une coupe longitudinale passant par l'ailette, cette dernière présente une forme générale de trapèze rectangle dont le côté formant un angle droit avec les bases constitue la paroi du logement 116. Les ailettes internes ont en quelque sorte une forme d'aile d'oiseau dont la partie scapulaire serait en regard de la face interne du flasque. Les dimensions des ailettes sont telles qu'un espace maximum est laissé entre le ventilateur interne et la partie sommitale des ailettes en regard du ventilateur interne, de manière à conserver une proximité avec le ventilateur interne adaptée à une bonne circulation de l'air dans l'espace libre laissé entre le flasque et les éléments internes de la machine. A titre d'exemple nullement limitatif, un espace de 4 à 5 mm est laissé entre le ventilateur interne et le sommet des ailettes, pour un dispositif comportant des flasques de diamètre interne d'environ 20 cm munis d'ailettes internes d'environ 20 mm de long, la longueur des ailettes (ou encore hauteur) étant entendue comme la dimension des ailettes selon l'axe (X).

La partie périphérique 118b du flasque avant 110 peut en outre comporter des ailettes dissipatives de la chaleur 117 sur sa face externe 112. Les ailettes dissipatives 117 sont allongées sensiblement selon un axe parallèle à l'axe (X) du rotor. Lorsque la carcasse 130 a une surface externe comportant un ensemble d'ailettes de refroidissement 131, les ailettes 117 du flasque avant 110 prolongent alors les passages formés par les ailettes de refroidissement 131 de la carcasse 130.

Le flasque arrière 120 comporte une partie centrale en forme de couronne 128a reliée à une partie périphérique cylindrique 128b. Comme pour le flasque avant 110, la face interne 121, tournée vers l'intérieur de la carcasse 130, comporte un logement 126a positionné dans la partie médiane de la face interne destiné à recevoir le palier 172. Ce logement 126a comporte en son centre un orifice prévu pour le passage de l'arbre de rotation 160 du rotor. Des joints d'étanchéité sont prévus au niveau de l'orifice de passage de l'arbre 160 et sur le périmètre de la partie centrale 128b destinée à venir en contact avec la carcasse 130. La partie périphérique 128b et la partie centrale 128a du flasque arrière 120 comportent des liaisons qui comprennent également les points de fixation du flasque à la carcasse. Par exemple, le flasque arrière comporte quatre liaisons avec quatre points de fixation (orifices pour passage d'une vis par exemple).

La face interne 121 du flasque arrière 120 comporte, de la même manière que pour le flasque avant 110, un ensemble d'ailettes 123, agencées à la périphérie du logement 126a du palier 172. Ces ailettes 123 ont la même fonction d'orientation du flux d'air créé par la rotation d'un ventilateur interne 182 placé entre le palier 172 et le rotor 150 et de captage de la chaleur de ce flux d'air. La face interne 121 du flasque arrière 120 comporte par exemple douze ailettes 123.

Les ailettes 123 sont de préférence réparties régulièrement autour du logement 126a. Leur forme et leurs dimensions sont de préférence identiques à celles des ailettes 113 de la face interne 111 du flasque avant 110, décrites plus haut.

Le flasque arrière 120 comporte au moins une ouverture disposée entre la partie centrale 128a et la partie périphérique 128b pour diriger l'air extérieur envoyé par le ventilateur externe 140 le long de la carcasse 130, notamment pour diriger cet air dans des passages formés par l'ensemble des ailettes de refroidissement 131 de la surface externe de la carcasse 130. Le flasque arrière 120 comporte par exemple quatre ouvertures de ce type. Ces ouvertures ont par exemple une forme d'arc de cercle, et sont réparties uniformément sur le périmètre de la partie centrale 128a du flasque 120.

Les ailettes de refroidissement 131 de la surface externe de la carcasse 130 sont allongées selon un axe sensiblement parallèle à l'axe du rotor (X). Par sensiblement parallèle à l'axe (X), on entend à plus ou moins 25° degrés près par rapport à cet axe (X). Ces ailettes de refroidissement 131 ont pour rôle d'augmenter la surface d'échange de la carcasse avec l'air pour une dissipation plus grande de la chaleur, et de diriger le flux d'air externe à la surface de la carcasse de manière à couvrir toute la longueur de la carcasse d'un flasque à un autre. Une continuité de passage du flux d'air externe est créée lorsque la partie périphérique du flasque avant 110 comporte également des ailettes de dissipation 117, de préférence orientées dans le même sens que les ailettes de refroidissement de la carcasse 130, améliorant ainsi le refroidissement de la carcasse et du flasque avant.

Dans la description, on entend par air externe l'air extérieur à la machine électrique tournante qui est fermée, et par air interne l'air contenu dans la machine électrique fermée, plus précisément l'air enfermé dans la carcasse étanche de la machine.

Le moteur électrique peut en outre comporter des plaques métalliques 132, de préférence en aluminium, montées sur la carcasse 130 et entourant les ailettes de refroidissement 131, pour maintenir l'air à proximité de la surface externe de la carcasse 130 et des ailettes de refroidissement 131 lors de sa circulation le long de la carcasse. Dans l'exemple de moteur représenté aux figures 3 à 7, les plaques métalliques 132 sont légèrement incurvées de manière à suivre la forme de la surface extérieure de la carcasse. Les plaques métalliques 132 sont de préférence réparties régulièrement autour de la carcasse, par exemple huit plaques sont fixées sur la carcasse, regroupées deux par deux pour former des unités espacées autour de la carcasse. Les plaques métalliques 132 sont montées sur la carcasse de manière à laisser un passage pour la circulation de l'air extérieur envoyé par le ventilateur externe 140. Ainsi, les plaques métalliques 132 peuvent s'appuyer sur la partie périphérique du flasque arrière 120.

La paire de ventilateurs internes (181, 182) disposée à l'intérieur de la carcasse permet de créer un flux d'air à l'intérieur de la carcasse lors de la rotation du rotor. Une circulation de l'air à l'intérieur de la carcasse étanche est provoquée par l'interaction entre les ventilateurs internes 181 et 182 en fonctionnement et les éléments structuraux de la machine au sein de la carcasse 130, notamment la structure des faces internes des flasques 110 et 120. Plus spécifiquement, les ailettes (113, 123) de la face interne (111, 121) des flasques avant et arrière (110, 120) sont aptes à diriger le flux d'air créé par chaque ventilateur interne (181, 182) de manière radiale vers les têtes 191 des bobines du stator 190 (écoulement selon une direction qui est centrifuge autour de l'axe (X) de l'arbre de rotation 160), puis à retourner le flux d'air depuis les têtes 191 de bobines vers le centre du flasque, d'abord selon une direction parallèle à l'axe (X) au niveau des têtes de bobines, puis radialement vers l'arbre de rotation (écoulement parallèle à l'axe (X) puis selon une direction centripète autour de l'axe (X)). Une telle circulation d'air interne est ainsi réalisée côté avant et côté arrière du moteur, de part et d'autre du rotor 150. Les ailettes des faces internes des flasques 113 et 123, en plus d'orienter le flux d'air interne, permettent de dissiper la chaleur du flux d'air et donc de refroidir les têtes 191 de bobines du stator 190, ainsi que l'arbre 160 et le rotor 150 de la machine électrique.

Le ventilateur externe 140, positionné à l'arrière du moteur entre la face externe du flasque arrière 120 et le palier 104, contribue au refroidissement de la carcasse 130 et des flasques par la génération d'un flux d'air externe, qui est d'abord dirigé radialement vers la périphérie de la face externe du flasque arrière 120, puis qui est dirigé vers le flasque avant 110 parallèlement à l'axe de rotation (X), de manière à longer la surface extérieure de la carcasse 130 munie préférentiellement des ailettes de refroidissement 131, et de préférence surmontée des plaques métalliques 132 qui confinent le flux d'air à la surface extérieure de la carcasse 130. L'air passe ainsi de préférence dans les passages formés entre les ailettes allongées sensiblement selon l'axe (X), en étant confiné à l'espace formé entre les plaques métalliques et la surface extérieure de la carcasse 130. Avantageusement, les ouvertures 127 du flasque arrière 120 permettent le passage de l'air extérieur envoyé par le ventilateur 140 de la face externe du flasque vers la surface extérieure de la carcasse 130 munie préférentiellement des ailettes de refroidissement 131.

Le ventilateur externe 140 est de dimension plus importante que celle des ventilateurs internes 181 et 182. La dimension du ventilateur 140 est choisie en fonction de la puissance du moteur et de la vitesse de rotation maximale, de manière à assurer un refroidissement optimal.

La présente invention s'applique avantageusement aux moteurs à réluctance synchrone, et de préférence aux machines ayant une puissance comprise entre 20 kW et 180 kW. A titre d'exemple non limitatif, le moteur refroidi selon l'invention peut être un moteur à réluctance synchrone d'une puissance continue de 30 kW, de puissance transitoire (Peak) 52 kW, pouvant fonctionner avec une tension d'alimentation du bus DC de 350 V, et pouvant présenter les dimensions suivantes : diamètre extérieur du rotor 134 mm, diamètre extérieur du stator de 200 mm, diamètre extérieur de la carcasse de 250 mm, longueur du moteur de 214 mm, longueur de la partie active (correspondant à la longueur de l'empilement des tôles du rotor) de 100 mm.

## Revendications

1. Machine électrique tournante (100) comportant:
- un stator (190) disposé dans une carcasse (130), ledit stator comportant des bobines ;
- un rotor (150) comportant un corps fixé à un arbre de rotation (160) monté rotatif dans le stator et tournant autour d'un axe (X) ;
- un premier palier (171) supportant un côté d'entraînement d'une charge (160a) de l'arbre de rotation (160) ;
- un deuxième palier (172) supportant un côté opposé au côté d'entraînement (160b) de la charge de l'arbre de rotation (160) ;
- un flasque avant (110) disposé à une première extrémité de la carcasse (130) et comportant un premier logement dans sa partie médiane pour recevoir le premier palier (171) ;
- un flasque arrière (120) disposé à une deuxième extrémité de la carcasse opposée à la première extrémité, et comportant un deuxième logement dans sa partie médiane pour recevoir le deuxième palier (172);
les flasques avant et arrière (110, 120) comportant chacun une face interne et une face externe,
- un support métallique fixe (106) relié à la carcasse de la machine,
- un capteur de position magnétique (101) pour mesurer la position angulaire du rotor lors de la rotation de l'arbre, ledit capteur de position (101) comportant :
- une partie tournante (108) comprenant un aimant (102), fixée à l'extrémité du côté opposé au côté d'entraînement (160b) de la charge de l'arbre de rotation (160) de manière à être solidaire de l'arbre de rotation (160) lors de la rotation de l'arbre ;
- une partie fixe (103) comportant des capteurs à effet Hall et des moyens de transmission des signaux de sortie du capteur (109), ladite partie fixe (103) étant en regard de la partie tournante (108) et étant montée sur un support métallique fixe (106) relié à la carcasse de la machine;
ladite partie tournante (108) étant désolidarisée de la partie fixe (103) du capteur de position (101) par un troisième palier (104) centré sur l'axe (X), ledit troisième palier étant fixé d'une part à l'extrémité du côté opposé au côté d'entraînement (160b) de la charge de l'arbre de rotation (160) et d'autre part aux parois d'une ouverture formée dans le support métallique (106) apte à laisser passer l'extrémité de l'arbre de rotation (160) muni de la partie tournante du capteur,
**caractérisée, en ce que**
le support métallique fixe (106) de la partie fixe (103) du capteur comporte une face interne tournée vers le flasque arrière (120) et une face externe orientée vers l'extérieur de la machine, ladite face externe comportant une surface plane (106a) en périphérie de l'ouverture du support métallique, ladite surface plane (106a) étant en contact avec la partie fixe (103) du capteur de position (101),
la face externe du support métallique (106) comporte un logement annulaire recevant la partie fixe (103) du capteur, ledit logement annulaire comportant la surface plane (106a), cette dernière se situant en périphérie de l'ouverture laissée pour l'extrémité de l'arbre comportant l'aimant du capteur de position.

2. Machine électrique selon la revendication 1, dans laquelle ledit troisième palier (104) est en contact avec la partie tournante (108) du capteur de position (101).

3. Machine électrique selon l'une des revendications 1 et 2, dans laquelle ladite partie tournante (108) du capteur de position comporte un insert (105) logé dans une cavité (107) formée à l'extrémité du côté opposé au côté d'entraînement (160b) de la charge de l'arbre de rotation (160), ladite cavité (107) comportant une ouverture vers l'extérieur de la machine, ledit insert (105) étant muni du côté de l'ouverture de la cavité (107) de l'aimant de capteur de position.

4. Machine électrique selon la revendication 3, dans laquelle ledit insert (105) de la partie tournante (108) du capteur de position (101) est formé d'un matériau amagnétique, de préférence un acier amagnétique ou du laiton.

5. Machine électrique selon l'une quelconque des revendications précédentes, dans laquelle ledit troisième palier (104) est formé d'un matériau ferromagnétique, de préférence un acier ferromagnétique.

6. Machine électrique selon l'une quelconque des revendications précédentes, dans laquelle ledit troisième palier (104) est de type à roulements, de préférence à billes, comportant de préférence une bague externe fixée aux parois de l'ouverture du support métallique (106) et une bague interne fixée à l'extrémité du côté opposé au côté d'entraînement (160b) de l'arbre de rotation (160) et en contact avec la partie tournante (108) du capteur (101).

7. Machine électrique selon l'une quelconque des revendications précédentes, dans laquelle le capteur de position magnétique intégré à la machine a un indice de protection IP67 selon la norme européenne EN60529 dans sa version en vigueur à la date de dépôt du présent brevet.

8. Machine électrique selon l'une quelconque des revendications précédentes, ayant une puissance comprise entre 20 kW et 75 kW.

9. Machine électrique selon l'une quelconque des revendications précédentes, à réluctance synchrone.

## Patentansprüche

1. Rotierende elektrische Maschine (100), umfassend:
- einen in einem Rahmen (130) angeordneten Stator (190), wobei der Stator Spulen umfasst;
- einen Rotor (150), der einen Körper umfasst, der an einer Drehwelle (160) befestigt ist, die drehbar im Stator montiert ist und sich um eine Achse (X) dreht;
- ein erstes Lager (171), das eine Antriebsseite einer Last (160a) der Drehwelle (160) trägt;
- ein zweites Lager (172), das eine Seite abstützt, die der Antriebsseite (160b) der Last der Drehwelle (160) gegenüberliegt;
- einen vorderen Flansch (110), der an einem ersten Ende des Rahmens (130) angeordnet ist und in seinem Mittelteil ein erstes Gehäuse zur Aufnahme des ersten Lagers (171) aufweist;
- einen hinteren Flansch (120), der an einem zweiten Ende des Gehäuses gegenüber dem ersten Ende angeordnet ist und in seinem mittleren Teil ein zweites Gehäuse zur Aufnahme des zweiten Lagers (172) umfasst;
wobei die vorderen und hinteren Flansche (110, 120) jeweils eine Innenfläche und eine Außenfläche umfassen,
- eine relativ zum Maschinengestell feste Metallstütze (106),
- einen magnetischen Positionssensor (101) zum Messen der Winkelposition des Rotors während der Drehung der Welle, wobei der Positionssensor (101) umfasst:
- ein rotierendes Teil (108), das einen Magneten (102) umfasst und am Ende der der Motorseite (160b) der Last gegenüberliegenden Seite der Drehwelle (160) befestigt ist, so dass es mit der Drehwelle (160) einstückig ist. zur Drehung der Welle;
- einen festen Teil (103), der Hall-Effekt-Sensoren und Mittel zur Übertragung der vom Sensor (109) ausgegebenen Signale umfasst, wobei der feste Teil (103) dem rotierenden Teil (108) zugewandt ist und auf einem festen Metallträger (106) montiert ist. mit dem Maschinenrahmen verbunden;
wobei der rotierende Teil (108) vom festen Teil (103) des Positionssensors (101) mittels eines dritten Lagers (104) getrennt ist, das auf der Achse (X) zentriert ist, wobei das dritte Lager von einer Seite zur gegenüberliegenden Seite befestigt ist Das seitliche Ende liegt an der Motorseite (160b) der Last der Drehwelle (160) und andererseits an den Wänden einer im Metallträger (106) angebrachten Öffnung, die für den Durchgang des vorgesehenen Endes der Drehwelle (160) geeignet ist mit dem rotierenden Teil des Sensors,
**dadurch gekennzeichnet, dass**
der feste Metallträger (106) des festen Teils (103) des Sensors eine dem hinteren Flansch (120) zugewandte Innenfläche und eine zur Außenseite der Maschine weisende Außenfläche aufweist, wobei die Außenfläche eine ebene Fläche (106a) aufweist der Umfang der Öffnung des Metallträgers, wobei die flache Oberfläche (106a) in Kontakt mit dem festen Teil (103) des Positionssensors (101) steht,
die Außenseite des Metallträgers (106) umfasst ein ringförmiges Gehäuse, das den stationären Teil (103) des Sensors aufnimmt, wobei das ringförmige Gehäuse die flache Oberfläche (106a) umfasst, wobei sich letztere am Rand der Öffnung auf der linken Seite befindet am Ende der Welle inklusive Positionssensormagnet.

2. Elektrische Maschine nach Anspruch 1, wobei das dritte Lager (104) in Kontakt mit dem rotierenden Teil (108) des Positionssensors (101) steht.

3. Elektrische Maschine nach einem der Ansprüche 1 und 2, wobei der rotierende Teil (108) des Positionssensors einen Einsatz (105) umfasst, der in einem Hohlraum (107) untergebracht ist, der am Ende der der Motorseite gegenüberliegenden Seite erhalten ist. 160b) der Last der rotierenden Welle (160), wobei der Hohlraum (107) eine Öffnung zur Außenseite der Maschine aufweist und der Einsatz (105) auf der Seite der Öffnung des Hohlraums (107) des Magneten vorgesehen ist der Sensorposition.

4. Elektrische Maschine nach Anspruch 3, wobei der Einsatz (105) des rotierenden Teils (108) des Positionssensors (101) aus einem nichtmagnetischen Material, vorzugsweise Stahl oder nichtmagnetischem Messing, gebildet ist.

5. Elektrische Maschine nach einem der vorhergehenden Ansprüche, wobei das dritte Lager (104) aus ferromagnetischem Material, vorzugsweise ferromagnetischem Stahl, gebildet ist.

6. Elektrische Maschine nach einem der vorhergehenden Ansprüche, wobei das dritte Lager (104) vom Typ mit Lagern, vorzugsweise Kugellagern, ist, die vorzugsweise einen Außenring umfassen, der an den Wänden der Öffnung des Metallträgers (106) befestigt ist, und einen Innenring, der am Ende der der Motorseite (160b) gegenüberliegenden Seite der Drehwelle (160) befestigt ist und mit dem rotierenden Teil (108) des Sensors (101) in Kontakt steht.

7. Elektrische Maschine nach einem der vorhergehenden Ansprüche, wobei der in die Maschine eingebaute magnetische Positionssensor die Schutzart IP67 gemäß der europäischen Norm EN 60529 in ihrer zum Anmeldetag des vorliegenden Patents gültigen Fassung aufweist.

8. Elektrische Maschine nach einem der vorhergehenden Ansprüche mit einer Leistung im Bereich von 20 kW bis 75 kW.

9. Elektrische Maschine nach einem der vorhergehenden Ansprüche, mit synchroner Reluktanz.

## Claims

1. Rotating electric machine (100) comprising:
- a stator (190) arranged in a frame (130), said stator comprising coils;
- a rotor (150) comprising a body fixed to a rotation shaft (160) rotatably mounted in the stator and rotating about an axis (X);
- a first bearing (171) supporting a driving side of a load (160a) of the rotation shaft (160);
- a second bearing (172) supporting a side opposite to the driving side (160b) of the load of the rotation shaft (160);
- a front flange (110) arranged at a first end of the frame (130) and having in its central part a first housing for receiving the first bearing (171);
- a rear flange (120) arranged at a second end of the casing opposite the first end, and comprising in its middle part a second housing for receiving the second bearing (172);
the front and rear flanges (110, 120) each comprising an inner face and an outer face,
- a fixed metal support (106) relative to the machine frame,
- a magnetic position sensor (101) for measuring the angular position of the rotor during rotation of the shaft, said position sensor (101) comprising:
- a rotating part (108) comprising a magnet (102), fixed to the end of the side opposite the motor side (160b) of the load of the rotation shaft (160) so as to be integral with the rotation shaft (160) to the rotation of the shaft;
- a fixed part (103) comprising Hall effect sensors and means for transmitting the signals in output from the sensor (109), said fixed part (103) facing the rotating part (108) and being mounted on a fixed metal support (106) connected to the machine frame;
said rotating part (108) being detached from the fixed part (103) of the position sensor (101) by means of a third bearing (104) centred on the axis (X), said third bearing being fixed from one side to the opposite side end to the motor side (160b) of the load of the rotation shaft (160) and on the other to the walls of an opening made in the metal support (106) suitable for passing the end of the rotation shaft (160) provided with the rotating part of the sensor,
**characterized in that**
the fixed metal support (106) of the fixed part (103) of the sensor has an internal face facing the rear flange (120) and an external face facing the outside of the machine, said external face comprising a flat surface (106a) on the periphery of the opening of the metal support, said flat surface (106a) being in contact with the fixed part (103) of the position sensor (101),
the outer face of the metal support (106) comprises an annular housing which receives the stationary part (103) of the sensor, said annular housing comprising the flat surface (106a), the latter being located at the periphery of the opening on the left at the end of the shaft including the position sensor magnet.

2. Electric machine according to claim 1, wherein said third bearing (104) is in contact with the rotating part (108) of the position sensor (101).

3. Electric machine according to one of claims 1 and 2, wherein said rotating part (108) of the position sensor comprises an insert (105) housed in a cavity (107) obtained at the end of the side opposite the motor side (160b) of the load of the rotating shaft (160), said cavity (107) having an opening towards the outside of the machine, said insert (105) being provided on the side of the opening of the cavity (107) of the magnet of the sensor position.

4. Electric machine according to claim 3, wherein said insert (105) of the rotating part (108) of the position sensor (101) is formed of a non-magnetic material, preferably steel or non-magnetic brass.

5. Electric machine according to any one of the preceding claims, wherein said third bearing (104) is formed of ferromagnetic material, preferably ferromagnetic steel.

6. Electric machine according to any one of the preceding claims, wherein said third bearing (104) is of the type with bearings, preferably ball bearings, preferably comprising an outer ring fixed to the walls of the opening of the metal support (106). and an inner ring fixed to the end of the side opposite the motor side (160b) of the rotation shaft (160) and in contact with the rotating part (108) of the sensor (101).

7. Electric machine according to any one of the preceding claims, wherein the magnetic position sensor incorporated in the machine has IP67 ingress protection according to the European standard EN 60529 in its version in force at the filing date of the present patent.

8. Electric machine according to any one of the preceding claims, having a power ranging from 20 kW to 75 kW.

9. Electric machine according to any one of the preceding claims, with synchronous reluctance.
